# EUROPÄISCHE PATENTANMELDUNG

(11) **EP 2 033 836 A2**
(43) Veröffentlichungstag der Anmeldung: **11.03.2009**
(21) Anmeldenummer: 08014118.7
(22) Anmeldetag: 07.08.2008
(51) Int. Cl.: B60L 11/12

(54) **Flurförderzeug mit einem Fahrmodus und einem Bremsmodus**

(30) Priorität: 09.08.2007 DE 102007037690
(71) Anmelder: VOLK Fahrzeugbau GmbH, 88339 Bad Waldsee (DE)
(72) Erfinder: Baur, Matthias, Dr., 89075 Ulm (DE)
(74) Vertreter: Roth, Klaus

(57) **Zusammenfassung**

Es wird ein Flurförderzeug, insbesondere Hybrid-Fahrersitz-Zugmaschine, mit wenigstens einem einen in einem elektrischen Leistungskreis (9, 10,11) fließenden Antriebsstrom aufweisenden, elektrisch angetriebenen Fahrmodus, wobei eine Antriebsmaschine (2) zum Antreiben wenigstens eines Laufrades (1) als Elektromotor (2) ausgebildet ist, wobei wenigstens eine Verbrennungskraftmaschine (5), insbesondere ein Dieselmotor (5), zum Erzeugen einer das Fahrzeug antreibenden Antriebsenergie vorgesehen ist, wobei wenigstens ein von der Verbrennungskraftmaschine (5) antreibbarer Stromgenerator (6) zum Erzeugen der Antriebsenergie und/oder elektrischer Energie für Speichermittel (8), insbesondere für wenigstens eine Batterie oder einen Akkumulator, vorgesehen ist, wobei wenigstens in einem Bremsmodus bzw. Rekuperationsmodus des Flurförderzeuges, insbesondere in einem Generator-Modus des Elektromotors (2), eine Reduktion der Ladespannung und/oder des Ladestroms des Stromgenerators vorgesehen ist, wobei eine Kontrolleinheit (3, 7) zum Kontrollieren der Ladespannung und/oder des Ladestroms des Stromgenerators (6) vorgesehen ist, vorgeschlagen, wobei die Nachteile des Stands der Technik vermieden werden. Dies wird erfindungsgemäß dadurch erreicht, dass die Kontrolleinheit (3, 7) zum Kontrollieren der Ladespannung und/oder des Ladestroms des Stromgenerators (6) in Abhängigkeit von der Stromrichtung des elektrischen Antriebsstroms im Leistungskreis (9, 10, 11) ausgebildet ist.

## Beschreibung

Die Erfindung betrifft ein Flurförderzeug, insbesondere eine Hybrid-Fahrsitz-Zugmaschine, mit wenigstens einem einen in einem elektrischen Leistungskreis fließenden Antriebsstrom aufweisenden, elektrisch angetriebenen Fahrmodus nach dem Oberbegriff des Anspruchs 1 sowie ein Verfahren zum Kontrollieren eines Flurförderzeuges nach dem Oberbegriff des Anspruchs 13.

### Stand der Technik

Flurförderzeuge, insbesondere Hybrid-Flurförderzeuge, mit einem Verbrennungsmotor und beispielsweise einem Elektroantrieb, vor allem für den gemischten Einsatz im Freien und in der Halle, sind bereits seit langem gebräuchlich. Entsprechende Hybrid-Flurförderzeuge werden beispielsweise auf Flughäfen, insbesondere als Gepäck-Zugmaschine oder dergleichen, und in der Industrie in unterschiedlichsten Ausführungen eingesetzt. Auf Flughäfen werden Gepäckschlepper eingesetzt, um das Gepäck der passagiere von den Gepäckabfertigungsbereichen zum Flugzeug bzw. in umgekehrter Richtung zu transportieren.

Für den Einsatz auf Flughäfen sind Hybrid-Fahrersitz-Zugmaschinen besonders geeignet, weil es dort einerseits auf dem Flughafen-Vorfeld weite Strecken zwischen dem Terminalgebäude und den Parkpositionen der Flugzeuge zurückzulegen gilt, während andererseits auch die Einfahrt in die geschlossenen, meist unterirdischen Gepäckabfertigungsbereiche im Inneren der Flughafengebäude erforderlich ist. Während Letzteres mit einem reinen Dieselfahrzeug aus Emissionsgründen kaum möglich wäre, eignen sich reine Elektrofahrzeuge aufgrund ihrer begrenzten. Batteriekapazität nur eingeschränkt für die Bewältigung weiter Strecken im Freien.

Bei einer Hybrid-Fahrersitz-Zugmaschine erzeugt dagegen z.B. während des Betriebs im Freien ein von einem Verbrennungsmotor angetriebener Generator Strom, der in die Traktionsbatterien des Fahrzeugs eingespeist wird. Da die Batterien folglich im verbrennungsmotorischen Betriebsmodus fortlaufend wieder aufgeladen werden, ist bei flughafentypischen Einsatzbedingungen, d.h. im Allgemeinen ca. 70-90 % Einsatz im Freien, 10-30 % Einsatz in geschlossenen Gebäuden, ein externes Aufladen der Batterien z.B. in einer Batterieladestation und/oder ein Wechseln der Batterien nicht erforderlich. Dies ist im durchgängigen Mehrschichtbetrieb - der auf Flughäfen die Regel ist - von großem Vorteil.

Bauartbedingt wird bei Hybrid-Fahrersitz-Zugmaschinen zwischen sogenannten Seriell-Hybridsystemen und Parallel-Hybridsystemen unterschieden. Bei einem Parallel-Hybridsystem liegen zwei parallele Antriebsstränge vor: In einem elektromotorischen Betriebsmodus werden die Antriebsräder vom Elektromotor angetrieben. In einem verbrennungsmotorischen Betriebsmodus werden die Antriebsräder dagegen direkt vom Dieselmotor angetrieben, wobei die Kraftübertragung typischerweise hydrostatisch erfolgt. Bei Seriell-Hybridsystemen besteht dagegen keine mechanische und/oder hydraulische Verbindung zwischen dem Verbrennungsmotor und den Antriebsrädern. Stattdessen werden die Antriebsräder stets vom Elektromotor angetrieben. Bei Zuschaltung des Verbrennungsmotors erzeugt dieser lediglich den erforderlichen Strom, um den Elektromotor zu betreiben und/oder die Batterien wieder aufzuladen.

Moderne Hybrid-Fahrersitz-Zugmaschinen weisen in der Regel eine sogenannte Rekuperationsbremse auf, mit der ein Teil der beim Bremsen abzubauenden Bewegungsenergie als elektrische Energie zurück gewonnen und in die Batterien des Fahrzeugs eingespeist wird.

Hybrid-Fahrersitz-Zugmaschinen verfügen dabei gewöhnlicherweise nicht nur über einen einzigen Rekuperations-Modus, sondern zumeist über sechs und mehr Rekuperationsmodi, für die häufig in der elektronischen Fahrsteuerung verschiedene Bremsrampen mit unterschiedlicher Bremsstärke hinterlegt sind: 1. Rekuperationsbremse, wenn der Fahrer während der Fahrt den Fuß vom Fahrpedal nimmt und/oder den Fahrtrichtungsschalter von der Vorwärts- bzw. Rückwärtsstellung in die Neutralstellung umlegt (Wegnahme des Fahrtrichtungssignals), 2. Rekuperationsbremse, wenn der Fahrer während der Fahrt den Fahrtrichtungsschalter von "vorwärts" auf "rückwärts" oder umgekehrt umlegt, 3. Rekuperationsbremse zur Realisierung beabsichtigter Geschwindigkeitsveränderungen, insbesondere sollwertreduzierung des Fahrpedals, 4. Rekuperationsbremse, wenn der Fahrer beispielsweise von einem.. verbrennungsmotorischen Betriebsmodus in einen elektrischen Betriebsmodus wechselt und/oder von einem normalen Fahrmodus in einen Rampen- bzw. Schleichfahrtmodus, soweit für diese Betriebsmodi Maximalgeschwindigkeiten vorgesehen sind, die kleiner sind..als die aktuelle Fahrgeschwindigkeit, 5. Rekuperationsbremse bei Überschreitung eines bestimmten Lenkeinschlagwinkels, soweit in diesem Fall eine Maximalgeschwindigkeit vorgesehen ist, die kleiner ist als die aktuelle Fahrgeschwindigkeit, und 6. Rekuperationsbremse zur Unterstützung der mechanischen Bremse bei einem Abbremsvorgang.

Durch die Rekuperationsbremse ergeben sich insbesondere drei Vorteile:

Die mechanischen Bremsen des Fahrzeugs werden entlastet. Dadurch tritt ein geringerer Verschleiß an Bremsbelägen und/oder Bremsscheiben auf und die Bremsleistung wird verbessert. Bei der Verwendung von Lamellenbremse kann eine Überhitzung des Öls und eine resultierende Beschädigung von Dichtungen oder Ähnlichem verhindert werden. Dies ist angesichts der zum Teil recht hohen Anhängelasten von bis zu 11,5 Tonnen im Flughafeneinsatz bzw. bis zu 30 Tonnen im Industrieeinsatz von großer Bedeutung.

Für den Fahrer ergibt sich durch die Rekuperationsbremse ein angenehmeres Fahrgefühl, da das Fahrzeug bereits beim Anheben des Fußes vom Fahrpedal - und folglich noch vor dem bzw. auch ohne Betätigen der Betriebsbremse - leicht verzögert. Dies ist zum Beispiel beim Heranrollen an unübersichtliche Verkehrssituationen vorteilhaft.

Durch die Energierückgewinnung beim Bremsen wird der Energiehaushalt des Fahrzeugs verbessert. Dieser Vorteil ist jedoch im Zugmaschineneinsatz von nachrangiger Bedeutung.

Als Zugmaschinen eingesetzte Hybrid-Fahrersitz-Zugmaschinen entsprechend dem Stand der Technik sind dabei meistens mit Drehstromantrieben und Blei-Säure-Akkumulatoren ausgestattet.

Charakteristisch für den Zugmaschineneinsatz ist, dass Zugmaschine in der Industrie und auf Flughäfen schwere Lasten von bis zu 30 Tonnen ziehen. Berücksichtigt man, dass das Eigengewicht dieser Zugmaschinen meist zwischen 3,5 und 4,5 Tonnen liegt, so wird deutlich, dass die angehängte Last zum ein Vielfaches schwerer ist als die Zugmaschine selbst.

Weiterhin ist charakteristisch, dass beispielsweise auf Flughäfen oft Hunderte von verschiedenen Anhängern unterschiedlichster Hersteller im Einsatz sind, deren Zugösendurchmesser vielfach deutlich voneinander abweichen. Da der Kupplungsbolzendurchmesser von Zugmaschinen sich jedoch notwendigerweise am jeweils kleinsten Zugösendurchmesser orientieren muss, kommt es vielfach zu einem mehr oder weniger großen Spiel zwischen Kupplungsbolzen und Zugöse. Beim Bremsen oder in Lastwechselsituationen ist in diesen Fällen vorübergehend keine formschlüssige Verbindung zwischen Zugmaschine und Anhänger gegeben. Die Anhänger nehmen daher erst zeitlich verspätet am Verzögerungsverlauf des Fahrzeugs teil, so dass beim Auflaufen bzw. Aufprallen der Anhänger ein kurzzeitiger Impuls von teils erheblicher Höhe auf die Zugmaschine einwirkt. Da Zugmaschinen auf Flughäfen typischerweise mit bis zu vier Anhängern betrieben werden, können sich durch die Addition der jeweiligen Abweichungen zwischen Bolzen- und Zugösendurchmesser kumulative Effekte ergeben, die eine Verstärkung des auf die Zugmaschine einwirkenden Aufpralls bzw. Impulses zur Folge haben.

Zudem ist charakteristisch für Drehstromantriebe, dass diese drehzahlgeregelt sind. Anders als herkömmliche Gleichstromantriebe versuchen Drehstromantriebe stets, die durch die Fahrpedalstellung vorgegebene Geschwindigkeit exakt beizubehalten, um so ein unbeabsichtigtes Beschleunigen oder Verzögern, des Fahrzeugs zu verhindern. Daher können bereits geringfügige Bodenunebenheiten dazu führen, dass der Antriebsmotor innerhalb von Sekundenbruchteilen - quasi in Echtzeit - fortlaufend zwischen Elektromotor-Modus und Rekuperations-Modus hin- und her wechselt.

Das Gleiche gilt auch dann, wenn eine Zugmaschine im Zugbetrieb einen Impuls durch die auflaufenden Anhänger erfährt. Während Fahrzeuge mit Gleichstromantrieben durch einen derartigen Impuls einfach eine Beschleunigung erfahren, wechselt der Antriebsmotor bei Drehstromantrieben in dieser Situation innerhalb von Sekundenbruchteilen in den Rekuperationsmodus und versucht, eben diese (vom Fahrer nicht beabsichtigte) Beschleunigung zu verhindern.

Dies ist aufgrund des folgenden Umstands äußerst problematisch: In Flurförderzeugen entsprechend des Stands der Technik können für die unterschiedlichen, oben dargestellten Rekuperationsmodi verschiedene Parameter definiert und - beispielsweise in der Fahrsteuerung, insbesondere AC-Inverter - hinterlegt werden, um die Stärke und den zeitlichen Verlauf eines Rekuperationsvorgangs zu modulieren (sogenannte "Bremsrampen"). Je nach Einsatzzweck und Rekuperationsmodus wird die Stärke der Rekuperation dabei meist in einem mittleren bis niedrigen Bereich definiert, wodurch die Höhe potentieller Rekuperationsströme von vorneherein limitiert wird.

Im Falle eines exogen auf das Fahrzeug einwirkenden Impulses ist die Stärke der Rekuperation dagegen ausschließlich von der Stärke des Impulses und der Leistung des Antriebsmotors im aktuellen Drehzahlbereich abhängig. Dies bedeutet, dass ggfs. die maximale Leistung bzw. das maximale Drehmoment des Antriebsmotors ausgeschöpft wird, um eine ungewollte Beschleunigung der Zugmaschine zu verhindern. Dabei sind Drehstromantriebe in Zugmaschinen durch eine spezifische Wicklung typischerweise so konzipiert, dass ihr Drehmoment bei niedrigen Geschwindigkeiten sehr hoch ist und bei ansteigenden Geschwindigkeiten abnimmt.

Bei einem gegebenen Antriebsmotor gilt daher ceteris paribus: Je stärker der auf das Fahrzeug einwirkende Impuls und je niedriger die aktuelle Drehzahl des Antriebsmotors ist, desto höher sind die auftretenden Rekuperationsströme. Vergegenwärtigt man sich die erhebliche Gewichtsdifferenz zwischen Zugmaschine und Anhängern, so wird einerseits deutlich, dass die hierbei auftretenden Impulse sehr stark sein können. Andererseits gilt, dass die Fahrgeschwindigkeiten mit schweren Anhängern - speziell auf schlechtem Untergrund - tendenziell eher gering sind.

Als Zwischenfazit ist daher festzuhalten, dass gerade im Zugmaschineneinsatz mit Anhängern eine Bedingungskonstellation vorherrscht, die durch sehr hohe, sehr schnell ansteigende und nur kurzzeitig anliegende Rekuperationsströme ("Stromspitzen") gekennzeichnet ist.

Charakteristisch vor allem für Blei-Säure-Akkumulatoren ist, dass die elektro-chemischen Prozesse beim Be- und Entladen der Traktionsbatterien träge sind und folglich mit einer gewissen Zeitverzögerung ablaufen. Beim Laden eines Blei-Säure-Akkumulators muss das aus dem aufgelösten Bleisulfat gewonnene Blei zur Elektrodenoberfläche transportiert werden, so dass die vergleichsweise geringe Diffusionsgeschwindigkeit der Bleiionen (Pb2+) einen limitierenden Faktor bei der Aufnahme kurzzeitiger Ladeströme darstellt. Gerade kurzzeitig auftretenden Rekuperationsströme, die durch eine hohe Stromanstiegsgeschwindigkeit und einen hohen Betrag der Stromstärke gekennzeichnet sind, d.h. vor allem "Stromspitzen", können daher selbst von einer ungeladenen Batterie nur begrenzt aufgenommen werden.

Im Zusammenspiel der drei Merkmale 1.) Zugmaschineneinsatz, 2.) Drehstromantrieb und 3.) Blei-Säure-Akkumulatoren ergeben sich in der Praxis spezifische Probleme:

Beim Auflaufen von Anhängern auf die Zugmaschine wechselt der Antriebsmotor innerhalb von Sekundenbruchteilen in den Rekuperationsmodus. Die resultierenden Rekuperationsströme sind vielfach sehr hoch, da erstens das Anhängergewicht ein Vielfaches des Zugmaschinengewichtes beträgt, da zweitens die Anhänger aufgrund der nicht gegebenen formschlüssigen Verbindung erst zeitverzögert am Verzögerungsverlauf der Zugmaschine teilhaben, so dass die resultierenden Verzögerungswerte sehr hoch sind, da drittens bei Bedarf das volle Drehmoment des Antriebsmotors ausgeschöpft wird, um eine ungewollte Beschleunigung zu verhindern, und da viertens das Drehmoment des Antriebsmotors speziell in den für Anhängerbetrieb typischen, niedrigen bis mittleren Geschwindigkeitsbereichen besonders hoch ist.

Zudem handelt es sich hier um Ströme, die nur sehr kurzzeitig - im Millisekunden- oder Sekundenbereich - fließen und/oder durch eine hohe Stromanstiegsgeschwindigkeit gekennzeichnet sind. Aufgrund der Trägheit der elektro-chemischen Prozesse zum Laden der Batterie, können die Akkumulatoren der Zugmaschine diese (ultra-) kurzzeitig fließenden, sehr hohen Ströme, in der Größenordnung von beispielsweise mehreren hundert Ampere, nur zum Teil aufnehmen. Dies gilt umso mehr, als in Hybrid-Fahrersitz-Zugmaschinen typischerweise Batterien mit einer vergleichsweise geringen Gesamtkapazität zum Einsatz kommen. Diese beträgt beispielsweise nur ca. 40-60 % der Batteriekapazität einer vergleichbaren, ähnlich leistungsstarken Elektro-Fahrersitz-Zugmaschine.

Die skizzierte Problematik kann bei leeren Batterien ebenso auftreten wie bei vollgeladenen Batterien und bei neuen Batterien ebenso wie bei alten. Ein zunehmender Sättigungsgrad bzw. Ladezustand der Batterien und/oder ein zunehmendes Alter der Batterien stellen jedoch Randbedingungen dar, die zur Verschärfung der skizzierten Problematik beitragen.

Besonders virulent ist die beschriebene Problematik in einem verbrennungsmotorischen Betriebsmodus von Hybrid-Fahrersitz-Zugmaschinen, da hier zusätzlich zum Rekuperationsstrom auch noch ein Generatorstrom in der Größenordnung von beispielsweise 200 bis 300 Ampere anliegt. Dies gilt in besonderem Maße im Fall von Seriell-Hybridsystemen. Aber auch bei Parallel-Hybridsystemen kann es - je nach Ausführungsform - in einem verbrennungsmotorischen Betriebsmodus zum Zusammentreffen von Generator- und Rekuperationsströmen kommen. Durch die Überlagerung der - ohnehin sehr hohen - Rekuperationsströme durch einen kontinuierlich anliegenden Generatorstrom von beispielsweise 200 bis 300 Ampere ergeben sich zum Teil sehr hohe Stromstärken.

Da die Traktionsbatterie die resultierenden Spitzenströme nicht aufnehmen kann, kommt es zu Spannungsspitzen, die eine Sicherheitsabschaltung und/oder Beschädigung der Fahrsteuerung, insbesondere AC-Inverter, und/oder anderer elektrischer und/oder elektronischer Komponenten des Fahrzeugs nach sich ziehen können. Eine Sicherheitsabschaltung der Fahrsteuerung, insbesondere AC-Inverter, erfolgt derzeit z.B. beim Modell "AC 3 Power" des führenden Herstellers ZAPI beispielsweise bei 115 Volt.

Bei einer Sicherheitsabschaltung und/oder Beschädigung der Fahrsteuerung, insbesondere AC-Inverter, fällt nicht nur die hydraulische Unterstützung der Lenkung und der Betriebsbremse aus. Viel problematischer ist vielmehr, dass es bei Fahrzeugen mit automatischer Feststellbremse, wie sie vielfach im Einsatz sind, zudem auch zum Einfallen der elektrohydraulisch gelüfteten Federspeicherzylinder kommt. Die Zugmaschine macht folglich völlig unvermittelt - für den Fahrer und den nachfolgenden Verkehr nicht vorhersehbar-eine Vollbremsung bis zum Stillstand. Dies ist aus sicherheitstechnischer Perspektive äußerst bedenklich, da es eine hohe Unfallgefahr bedingt. Zudem kann es bei wiederholtem Auftreten hohe Reparaturkosten zur Folge haben, z.B. für verschlissene Bremsbeläge der Feststellbremse oder defekte Fahrsteuerungen, insbesondere AC-Inverter.

Das beschriebene Problem wird wahrscheinlich in Zukunft stark an Bedeutung gewinnen, da der Trend zu immer stärkeren elektrischen Antriebsmotoren auch zur Folge hat, dass im Rekuperationsbetrieb zukünftig höhere Rekuperationsströme zu erwarten sind. Nach heutigem Stand der Technik verfügen Hybrid-Fahrersitz-Zugmaschinen mit einer Betriebsspannung von 80 Volt über maximal 20 KW Antriebsleistung (60 Min.-Rating). Der Engpass hierbei sind die hohen Stromstärken, die aus der vergleichsweise geringen Spannung von nur 80 Volt resultieren. Denn die heute am Markt verfügbaren Fahrsteuerungen, insbesondere AC-Inverter, können z.B. maximal Ströme von ca. 650 Ampere bewältigen (vgl. z.B. ZAPI "AC 3 Power"). In den kommenden Jahren ist jedoch mit Fahrsteuerungen zu rechnen, die Ströme von bis zu 1.000 Ampere bewältigen können, was dann wiederum Antriebsleistungen von rund 30 KW ermöglichen würde.

Zur Entschärfung der dargestellten Problematik nicht vollständig von der Batterie aufnehmbarer Rekuperationsströme und daraus resultierender Spannungsspitzen wird in Hybrid-Fahrersitz-Zugmaschinen entsprechend dem Stand der Technik zum Teil bei Rekuperationsvorgängen der Generator kurzzeitig abgeschaltet oder in der Leistung deutlich gedrosselt, d.h. die Ladespannung und/oder der Ladestrom wird vorübergehend reduziert.

Die Traktionsbatterie muss beim Verzögern folglich nur den Rekuperationsstrom aufnehmen, nicht aber - on top - den vom Generator erzeugten Strom. Bei Fahrzeugen entsprechend dem Stand der Technik wird diese Regelung durch einen Sensor "getriggert", der die Stellung des Fahrpedals erfasst. D.h. der Generator wird für einige Sekunden abgeschaltet bzw. in der Leistung gedrosselt, sobald das Fahrpedal freigegeben bzw. nicht mehr betätigt wird. Eine solche Regelung entsprechend dem Stand der Technik ist jedoch aus wenigstens drei Gründen nachteilig:
(1.) Eine Reduzierung der Ladespannung und/oder des Ladestroms erfolgt nur bei vollständiger Freigabe des Fahrpedals [0 = Sollwert_{NEU} < Sollwert_{ALT}]. Da der Antriebsmotor jedoch auch bei einer Sollwertreduzierung des Fahrpedals, d.h. bei einer Reduzierung des Pedalwegs bzw. der Fahrpedalstellung [0 < Sollwert_{NEU} < Sollwert_{ALT}] in einen Rekuperationsmodus wechselt, kann das Aufeinandertreffen von Lade- und Rekuperationsströmen durch diese Art der Regelung nicht zuverlässig verhindert werden
(2.) Nachteilig ist weiterhin, dass die Auslösung der beschriebenen Generatorabschaltung über die Fahrpedalstellung bei modernen Drehstromantrieben generell zu kurz greift. Denn moderne Drehstromantriebe können selbst bei unveränderter Fahrpedalstellung in den Rekuperationsmodus wechseln. Dabei können verschiedene Fälle unterschieden werden:
   (a.) Wie oben dargestellt, wechseln Drehstrommotoren bereits bei geringfügigen Bodenunebenheiten und/oder an Gefällstrecken immer wieder in den Rekuperationsmodus, um die durch die Fahrpedalstellung vorgegebene Geschwindigkeit beizubehalten und eine ungewollte Beschleunigung des Fahrzeugs zu verhindern.
   (b.) Wird bei Bergabfahrt mit durchgetretenem Fahrpedal die bauartbedingt.e Höchstgeschwindigkeit und folglich die Maximaldrehzahl des elektrischen Antriebsmotors erreicht, beispielsweise 250 Hz entsprechend - je nach Getriebeübersetzung - ca. 30 km/h, dann setzt eine Rekuperationsbremsung ein, um eine weitere Beschleunigung des Fahrzeugs zu verhindern. Dies geschieht auch dann, wenn der Fahrer das Fahrpedal weiterhin voll durchtritt. Auf Flughäfen tritt eine derartige Situation sehr häufig ein, da es hier vielfach Unterführungen gibt, z.B. unter Start- und Landebahnen, welche die Fahrer mit Maximalgeschwindigkeit durchfahren. Diese weisen typischerweise ein Gefälle von rund 10 % auf.
   (c.) Wird der Fahrtrichtungsschalter des Fahrzeugs während der Fahrt aus der Vorwärts- in die Rückwärtsstellung gewechselt oder umgekehrt, dann findet ebenfalls eine Rekuperationsbremsung des Fahrzeugs bis zum Stillstand statt, um die anschließende Fahrtrichtungsänderung zu ermöglichen. Dies geschieht auch dann, wenn der Fahrer das Fahrpedal weiterhin voll durchtritt. Auch diese Situation tritt in der Praxis immer wieder ein, da die Fahrer im Rangierbetrieb aus Bequemlichkeit nicht immer mit dem Fuß zwischen Fahr- und Bremspedal hin und her wechseln.
   (d.) Wird der Fahrtrichtungsschalter des Fahrzeugs während der Fahrt aus der Vorwärts- bzw. Rückwärtsstellung in die Neutralstellung gebracht (Wegnahme de Fahrtrichtungssignals), dann findet ebenfalls eine Rekuperationsbremsung des Fahrzeugs bis zum Stillstand statt. Dies geschieht selbst dann, wenn der Fahrer das Fahrpedal weiterhin voll durchtritt.
   (e.) Speziell im Flughafeneinsatz werden bei Hybrid-Fahrersitz-Zugmaschinen oft unterschiedliche Maximalgeschwindigkeiten für den verbrennungsmotorischen und den rein elektromotorischen Betriebsmodus vorgesehen bzw. eingestellt. Dies hat im Wesentlichen den folgenden Grund: Es kommt häufig vor, dass die Fahrer - entgegen einschlägiger Anweisungen - den Verbrennungsmotor im Freien nicht anschalten, weil der verbrennungsmotorlose Antrieb deutlich leiser und für sie folglich angenehmer ist. Diese Incompliance hat negative Konsequenzen für die Energiebilanz entsprechender Fahrzeuge, da dann die Batterien während des Betriebs im Freien nicht mehr nachgeladen werden. Als Folge hiervon kann z.B. ein externes Nachladen der Batterien erforderlich werden, was entsprechende Stillstands- bzw. Ausfallzeiten nach sich zieht.
      Zur Lösung dieses Disziplinierungsproblems wird bei Fahrzeugen entsprechend des Stands der Technik die maximale Höchstgeschwindigkeit in einem rein elektromotorischen Betriebsmodus beispielsweise auf 10 bis 20 km/h reduziert, während in einem verbrennungsmotorischen Betriebsmodus höhere Maximalgeschwindigkeiten von z.B. 30 km/h zugelassen werden. Für die Fahrer wird dadurch ein Anreiz geschaffen, den Verbrennungsmotor im Freien anzuschalten - denn dies ermöglicht es ihnen, schneller zu fahren.
      Wechselt der Fahrer nun jedoch - beispielsweise bei der Einfahrt in einen Gepäckabfertigungsbereich im Gebäudeinneren - vom verbrennungsmotorischen Betriebsmodus in den rein elektromotorischen Betriebsmodus, so wird die Geschwindigkeit des Fahrzeugs durch eine Rekuperationsbremsung automatisch reduziert, sofern die aktuelle Fahrgeschwindigkeit größer ist als der für den rein elektromotorischen Betriebsmodus voreingestellte bzw. in der Fahrsteuerung hinterlegte Maximalwert. Eine solche Rekuperationsbremsung erfolgt auch dann, wenn der Fahrer das Fahrpedal während des Umschaltens weiterhin voll durchtritt. Da die Abschaltung des Verbrennungsmotors bis zum vollständigen Stillstand meist geringfügig zeitverzögert erfolgt, kann es in dieser Situation zu einer kurzzeitigen Überlagerung von Rekuperations- und Generatorströmen kommen.
   (f.) Manche Flurförderzeuge, insbesondere im Industrieeinsatz, sind mit einem sogenannten Rampen- bzw. Sehleichfahrtschalter ausgestattet. Wird dieser betätigt, so wird die Maximalgeschwindigkeit des Fahrzeugs auf einen voreingestellen Wert von z.B. 4 km/h reduziert. Dadurch lässt sich die Geschwindigkeit auf Gefällstrecken verringern und präzise kontrollieren, was vor allem beim Betrieb auf Rampen mit hohen Anhängelasten von bis zu 30 Tonnen vorteilhaft ist. Erfolgt die Betätigung des Rampen- bzw. Schleichfahrtschaltexs bei einer aktuellen Fahrgeschwindigkeit, die höher ist als der für den Rampen- bzw. Schleichfahrtmodus voreingestellte bzw. in der Fahrsteuerung hinterlegte Wert, so erfolgt auch bei voll durchgetretenem Fahrpedal eine Rekuperationsbremsung.
   (g.) Aus Sicherheitsgründen verfügen Flurförderzeuge über sogenannte Totmannschalter, welche beispielsweise als Fußkontaktschalter ausgeführt sind. Nimmt der Fahrer während der Fahrt beispielsweise seinen linken Fuß vom Fußkontaktschalter, so erfolgt eine Rekuperationsbremsung auch dann, wenn er mit dem rechten Fuß weiterhin das Fahrpedal betätigt.
   (h.) In manchen Flurförderzeugen wird aus Sicherheitsgründen bei Kurvenfahrt die Fahrgeschwindigkeit reduziert. Beispielsweise erfolgt bei Überschreiten eines definierten Lenkeinschlagswinkels eine Reduktion der maximal zulässigen Fahrgeschwindigkeit auf einen voreingestellten Nert. Ist die aktuelle Fahrgeschwindigkeit des Fahrzeugs höher als dieser Wert, so erfolgt eine Rekuperationsbremsung auch dann, wenn der Fahrer das Fahrpedal weiterhin voll durchtritt.
(3.) Nachteilig ist schließlich, dass bei der Auslösung der beschriebenen Generatorabschaltung über die Fahrpedalstellung keine zuverlässigen Informationen über den Endzeitpünkt des Rekuperationsvorgangs vorliegen. Zwar wird man im Regelfall davor ausgehen können, dass eine Rekuperationsbremsung spätestens dann beendet ist, wenn der Fahrer das Fahrpedal nach erfolgter Freigabe erneut betätigt. Probleme ergeben sich jedoch im umgekehrten Fall - wenn der Fahrer das Fahrpedal zunächst nicht wieder betätigt. So ist es in der Praxis beispielsweise üblich, dass ein entsprechendes Fahrzeug an der Parkposition eines Flugzeugs mit laufendem Dieselmotor abgestellt wird, um entstehende Wartezeiten zum Aufladen der Batterie zu nutzen. Eine solche Zwischenladung würde jedoch unmöglich werden, wenn ein beim Anhalten des Fahrzeugs beendeter Ladevorgang erst nach erneuter Betätigung des Fahrpedals wieder aufgenommen würde.

Zur Lösung dieses Problems wird in Fahrzeugen entsprechend dem Stand der Technik beispielsweise ein festes Zeitintervall - z.B. mittels eines Zeitrelais - definiert, nach dessen verstrichen der Generator nach erfolgter Ladespannungs-und/oder Ladestromreduzierung wieder auf seine Ausgangsleistung hochgefahren wird. Nachteilig an diesem Lösungsansatz ist insbesondere der folgende Sachverhalt: Wird das Zeitintervall für die Ladespannungs- und/oder Zadestromreduzierung zu kurz definiert, so kann ein Zusammentreffen von Rekuperations- und Ladestrom nicht zuverlässig ausgeschlossen werden; wird es dagegen zu lang gewählt, so kann dies die Energiebilanz eines entsprechenden Fahrzeugs deutlich verschlechtern, weil der Generator gegebenenfalls - je nach Einsatzprofil - die Batterie kaum noch lädt.

Als Zwischenfazit ist daher festzuhalten, dass eine fahrpedalstellungsabhängige Ladespännungs- und/oder Ladestromreduzierung bei der Bewältigung der eingangs beschriebenen Problematik einer durch Strom- bzw. Spannungsspitzen induzierten Selbstabschaltung und/oder Beschädigung der Fahrsteuerung und/oder anderer elektronischer und/oder elektrischer Fahrzeugkomponenten beim Auftreten nicht oder nicht vollständig von der Batterie aufnehmbarer Rekuperationsströme zu kurz greift. Insbesondere gibt es zahlreiche praxisrelevante Fälle bzw. Situationen in denen eine Ladespannungs- und/oder Ladestromreduzierung gar nicht erfolgt, obwohl sich das Fahrzeug in einem Rekuperationsmodus befindet.

### Aufgabe und Vorteil der Erfindung

Aufgabe der Erfindung ist es demgegenüber, ein Verfahren bzw. ein Flurförderzeug, insbesondere eine Hybrid-Fahrsitz-Zugmaschine vorzuschlagen, wobei die Nachteile des Stands der Technik im Wesentlichen vermieden werden.

Diese Aufgabe wird, von einem Flurförderzeug bzw. Verfahren der einleitend genannten Art, durch die kennzeichnenden Merkmale der Ansprüche 1 bzw. 13 gelöst. Durch die in den Unteransprüchen genannten Maßnahmen sind vorteilhafte Ausführungen und Weiterbildungen der Erfindung möglich.

Dementsprechend zeichnet sich ein erfindungsgemäßes Flurförderzeug bzw. Verfahren dadurch aus, dass die Kontrolleinheit zum Kontrollieren der Generatorleistung bzw. der von diesem bereitgestellten Ladespannung und/oder des von diesem erzeugten Ladestroms in Abhängigkeit von der Stromrichtung im Leistungskreis ausgebildet ist.

Mit Hilfe einer derartigen Kontrolleinheit gemäß der Erfindung, mittels welcher in Abhängigkeit der Stromrichtung im Leistungskreis eine vollständige oder teilweise Reduktion der Ladespannung und/oder des Ladestroms eines Stromgenerators erfolgt, kann eine besonders einfache, wirkungsvolle und betriebssichere Regelung erfolgen. Eine vollständige oder teilweise Ladespannung- und/oder Ladestromreduktion ist in Sekundenbruchteilen möglich, so dass ohne Zeitverzögerung auf Rekuperationsvorgänge reagiert werden kann. Hierdurch kann zuverlässig verhindert werden, das Rekuperationsströme durch Ladeströme eines Generators überlagert und dadurch verstärkt werden. Dadurch kann die Wahrscheinlichkeit nachteiliger Strom- bzw. Spannungsspitzen im Leistungskreis, die beispielsweise zur Selbstabschaltung und/oder Beschädigung der Fahrzeugsteuerung und/oder anderer elektronischer und/oder elektrischer Fahrzeugkomponenten führen könnten, erheblich reduziert werden.

Gemäß der Erfindung kann eine vollständige oder teilweise Ladespannungs- und/oder Ladestromreduzierung in vorteilhafter weise unabhängig von der Fahrpedalstellung realisiert werden. Entsprechend wird eine besonders kostengünstige Lösung vorgeschlagen, die die Nachteile des Stands der Technik bzw. die vor allem auch das Problem einer durch Strom- bzw. Spannungsspitzen induzierten Selbstabschaltung und/oder Beschädigung der Fahrsteuerung und/oder anderer elektronischer und/oder elektrischer Fahrzeugkomponenten beim Auftreten nicht oder nicht vollständig von der Batterie aufnehmbarer Rekuperationsströme vollständig beseitigt.

Vorteilhafterweise ist die Kontrolleinheit zum Kontrollieren des Generators bzw. der von diesem bereitgestellten Ladespannung und/oder des von diesem erzeugten Ladestroms in Abhängigkeit von der Stromrichtung und der Stromstärke des elektrischen Stroms im Leistungskreis ausgebildet. Hiermit wird ermöglicht, dass beispielsweise bei sehr geringen Stromstärken keine vollständige Ladestromreduzierung erfolgt, um so die verbrennungsmotorisch erzeugte Energie wenigstens teilweise mit Hilfe der elektrischen Speichermittel zwischenzuspeichern und später bzw. bei Bedarf zu verwenden.

Vorteilhafterweise ist wenigstens eine einen Sensor umfassende Sensoreinheit zum Erfassen der Stromrichtung und/oder der Stromstärke des elektrischen Stroms im Leistungskreis vorgesehen. Gegebenenfalls kann hier eine einzige Sensoreinheit oder auch separate Sensoreinheiten mit entsprechend speziellen Sensoren verwendet werden.

vorzugsweise ist der Sensor als Messwiderstand ausgebildet. Derartige Messwiderstände bzw. sogenannte Shunts sind bereits in der Elektronik gebräuchlich, so dass auf handelsübliche Komponenten zurückgegriffen werden kann. Dies erhöht die Wirtschaftlichkeit der Erfindung.

Vorteilhafterweise weist die Kontrolleinheit wenigstens einen AC-Inverter auf. Entsprechende AC-Inverter sind in drehstrombetriebenen Hybrid-Fahrersitz-Zugmaschinen entsprechend dem Stand der Technik als Fahrsteuerung verbaut. Da im Regelfall folglich keine zusätzlichen Komponenten bzw. Bauteile erforderlich sind, wird die Wirtschaftlichkeit der Erfindung noch weiter verbessert.

In bevorzugten Varianten der Erfindung ist die Modulierung Generatorleistung bzw. der vom Generator bereitgestellten Ladespannung und/oder des von diesem erzeugten Ladestroms in Abhängigkeit der Stromstärke des Rekuperationsstroms und/oder des Ladezustandes der Speichermittel und/oder in Abhängigkeit vom Alter der Speichermittel vorgesehen. Hierdurch kann ein optimaler Trade-off zwischen der Betriebssicherheit und der Energiebilanz eines entsprechenden Fahrzeugs in Abhängigkeit besonders relevanter Rahmenbedingungen bzw. Parametern des Flurförderzeuges erfolgen.

Je nach Bauart des Generators und Ausführungsform der Reglerelektronik kann es im Falle der Reduktion der Ladespannung und/oder des Ladestroms zu "überschießenden" Reaktionen kommen, da die Ladespannung, die ggfs. als Rückköppelungsinformation in den Regelungskreislauf der Kontrolleinheit eingeht, durch die Batteriespannung überlagert und somit verfälscht wird. Dies kann erfindungsgemäß durch eine Diode zwischen Generator und Batterie verhindert werden.

Da eine fahrpedalstellungsabhängige Regelung der Generatorleistung bzw. der vom Generator bereitgestellten Ladespannung und/oder des von diesem erzeugten Ladestroms aus den oben dargestellten Gründen zu kurz greift, erfolgt gemäß der Erfindung eine Regelung in Abhängigkeit von der Stromflussrichtung und/oder Stromstärke im Leistungskreis des Fahrzeugs. Dadurch ist es möglich, exakt zu bestimmen, wann ein Rekuperationsvorgang beginnt, wie stark er ist und wann er wieder endet. Letzteres bedingt, dass auch die erneute Erhöhung der Ladespannung und/oder des Ladestroms in der gleichen Weise ausgelöst werden kann. Eine solche Erhöhung der Ladespannung und/oder des Ladestroms kann entweder auf das Ausgangsniveau vor dem Rekuperationsvorgang oder - speziell nach längeren Rekuperationsvorgängen - auf das in Abhängigkeit relevanter Parameter, insbesondere Batteriespannung und/oder aktueller Stromverbrauch des Fahrzeugs, optimale Niveau erfölgen.

In einer vorteilhaften Ausführungsvariante werden Stromflussrichtung und Stromstärke über einen Sensor im Leistungs-Stromkreis des Fahrzeugs, beispielsweise einen sogenannten Shunt, abgegriffen und an die Generatorsteuerung weitergeleitet, um basierend darauf die Generatorleistung bzw. die von diesem bereitgestellte Ladespannung und/oder den von diesem erzeugten Ladestrom zu modulieren. Diese Ausführungsvariante bietet den Vorteil, dass sie auch in den Sonderfällen funktioniert, in welchen eine rein fahrpedalabhängige Regelung versagt, z.B. Bergabfahrt mit Maximalgeschwindigkeit und voll durchgetretenem Fahrpedal.

Zudem hat der erfindungsgemäße Ansatz gegenüber einer fahrpedalstellungsabhängigen Ladespannungs- und/oder Ladestromreduzierung eine verbesserte Energiebilanz zur Folge. Denn eine erneute Erhöhung der Ladespannung und/oder des Ladestroms erfolgt erfindungsgemäß baldmöglichst nach beendigung eines Rekuperationsvorgangs und nicht erst nach dem Verstrichen eines vordefinierten Zeitintervalls, wie dies bei einer herkömmlichen, beispielsweise zeitrelaisgesteuerten Regelung der Fall ist. Dieser Aspekt ist besonders wichtig, da eine teilweise oder vollständige Ladestromreduzierung beim erfindungsgemäßen Ansatz sehr viel häufiger zu erwarten ist als bei einer fahrpedalstellungsabhängigen Regelung, nämlich insbesondere auch in den Fällen, in denen eine fahrpedalstellungsabhängige Regelung- wie oben dargestellt - versagt.

In einer vorteilhaften Ausführungsvariante wird eine Verbindung zwischen der Fahrsteuerung, insbesondere einen AC-Inverter oder dergleichen, und der Generatorsteuerung vorgesehen. Da die Fahrsteuerung bzw. der AC-Inverter die aktuelle Stromrichtung und/oder Stromstärke vorzugsweise in Echtzeit erkennt, ist es möglich, Ausgangssignal der Fahrsteuerung bzw. des AC-Inverters zu nutzen, um mittels der Generatorsteuerung die Generatorleistung bzw. die vom Generator bereitgestellte Ladespannung und/oder den von diesem erzeugten Ladestrom zu modulieren. Zusätzliche Bauteile, wie beispielsweise ein Shunt, sind in dieser Ausführungsvariante folglich nicht erforderlich.

In einer weiteren Variante der Erfindung ist es möglich, die Generatorleistung bzw. die vom Generator bereitgestellte Ladespannung und/oder den von diesem erzeugten Ladestrom in Abhängigkeit vom Batterieladezustand gestaffelt zu modulieren. So ist denkbar, z.B. bei einer zu weniger als 50 % aufgeladenen Batterie im Rekuperationsbetrieb den Ladestrom nur zu drossel bzw. teilweise zu reduzieren. Bei einer Batterieladung von 50 % und darüber könnte dann im Rekuperationsbetrieb der Ladestrom auf 0 reduziert werden. Der gestaffelte Ansatz dieser Ausführungsvariante hat eine nochmalige Verbesserung der Energiebilanz des Fahrzeugs zur Folge.

Das vorgeschlagene System hat den Vorteil, dass es die Reduktion der Ladespannung und/oder des Ladestroms auch in den Fällen zuverlässig gewährleisten kann, in denen eine fahrpedälstellungsabhängige Regelung versagt. Das eingangs beschriebene Problem - eine durch Strom- bzw. Spannungsspitzen induzierte Selbstabschaltung und/oder Beschädigung der Fahrsteuerung und/oder anderer elektronischer und/oder elektrischer Fahrzeugkomponenten beim Auftreten-nicht oder nicht vollständig von der Batterie aufnehmbarer Rekuperationsströme - kann dadurch deutlich zuverlässiger verhindert werden als mit den hierfür bislang verwendete Systemen.

Das vorgeschlagene System hat zudem den Vorteil, dass es sehr kostengünstig umgesetzt werden kann, wobei im Allgemeinen keine wesentlichen bzw. kostenträchtigen zusätzlichen Bauteile benötigt werden. Die wesentlichen Komponenten des Systemes Dieselmotor mit angeflanschtem Generator, eine elektronische Generatorsteuerung sowie eine Fahrsteuerung, insbesondere AC-Inverter - sind vielmehr bereits serienmäßig vorhanden. Außerdem arbeitet das vorgeschlagene System nahezu verschleißfrei.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: ein schematisches Blockschaltbild eines erfindungsgemäßen Flurförderzeuges in einer ersten Ausführungsform,
- Figur 2: ein schematisches Blockschaltbild eines erfindungsgemäßen Flurförderzeugs in einem zweiten Ausführungsbeispiel,
- Figur 3: ein schematisches Blockschaltbild eines erfindungsgemäßen Flurförderzeugs in einer dritten Ausführungsform und
- Figur 4: ein schematisches Blockschaltbild eines erfindungsgemäßen Flurförderzeugs einer vierten Ausführungsvariante.

Gemäß den Figuren werden Laufräder 1 über einen Elektromotor 2 angetrieben. Der Elektromotor 2 ist über ein Getriebe 4 mit den Laufrädern 1 verbunden.

Eine Fahrsteuerung 3, die insbesondere als AC-Inverter ausgebildet ist, steuert bzw. kontrolliert den Elektromotor 2. Darüber hinaus ist ein Verbrennungsmotor 5 bzw. Dieselmotor 5 vorgesehen, der im Allgemeinen ohne Getriebeübersetzung oder dergleichen einen Generator 6 antreibt. Der Generator 6 erzeugt elektrische Energie, die vorzugsweise mittels einer Generatorsteuerung 7, insbesondere AC-Inverter, einer Traktionsbatterie 8 mittels Leitungen 9 zugeleitet wird.

Mittels Leitungen 10 und 11 wird die elektrische Energie des generators 6 bzw. Dieselmotors 5 mit Hilfe der Fahrsteuerung 3 dem Elektromotor 2 zugeführt und dieser entsprechend gesteuert. Dementsprechend handelt es sich bei den abgebildeten Ausführungsvarianten um serielle Hybridfahrzeuge.

Darüber hinaus sind elektrische Steuerleitungen 12 vorgesehen, die in den Blockschaltbildern gestrichelt dargestellt sind. Insbesondere sind die Leitungen 12 zwischen der Fahrsteuerung 3 und der Generatorsteuerung 7 angeordnet.

In einem Bremsmodus bzw. Rekuperationsmodus ist der Elektromotor 2 als Generator ausgebildet, d.h. dieser erzeugt elektrische Energie, wodurch die Laufräder 1 gebremst werden. Der Wechsel erfolgt durch die Umkehrung der Stromrichtung in den Leistungen 11 bzw. 10 bzw. 9. Die Bremsenergie wird in die Traktionsbatterien eingespeist.

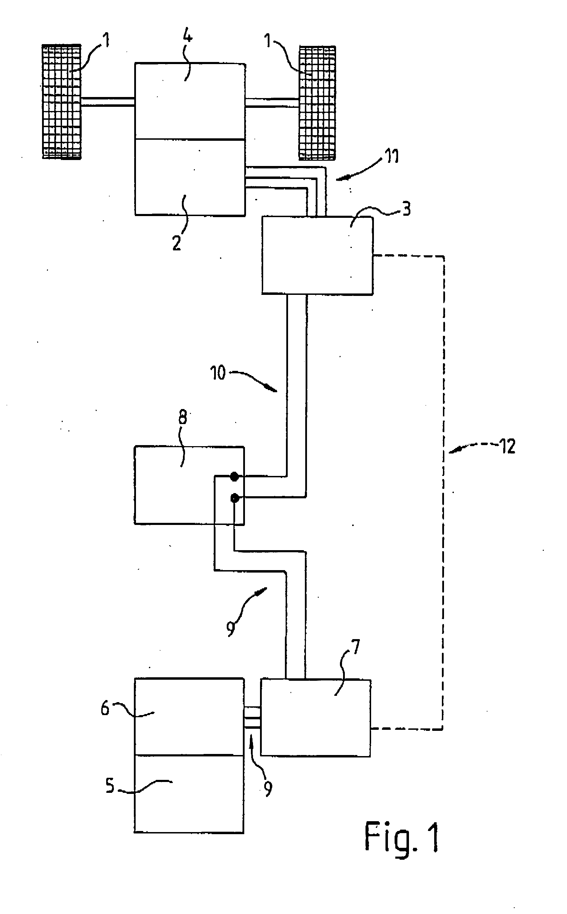

Gemäß dem Ausführungsbeispiel der Figur 1 sind keine Messwiederstände bzw. Shuntwiderstände vorgesehen. Dies kann als besonders einfache und vorteilhafte Ausführungsform angesehen werden, bei der die Stärke des in die Batterie 8 eingespeisten Stromes rein rechnerisch durch die Generator- bzw. Fahrsteuerung 7, 3 ermittelt wird. Die Realisierung dieser Variante umfasst insbesondere einen vorteilhaften Algorithmus zur Umrechnung von Drehstrom in Gleichstrom.

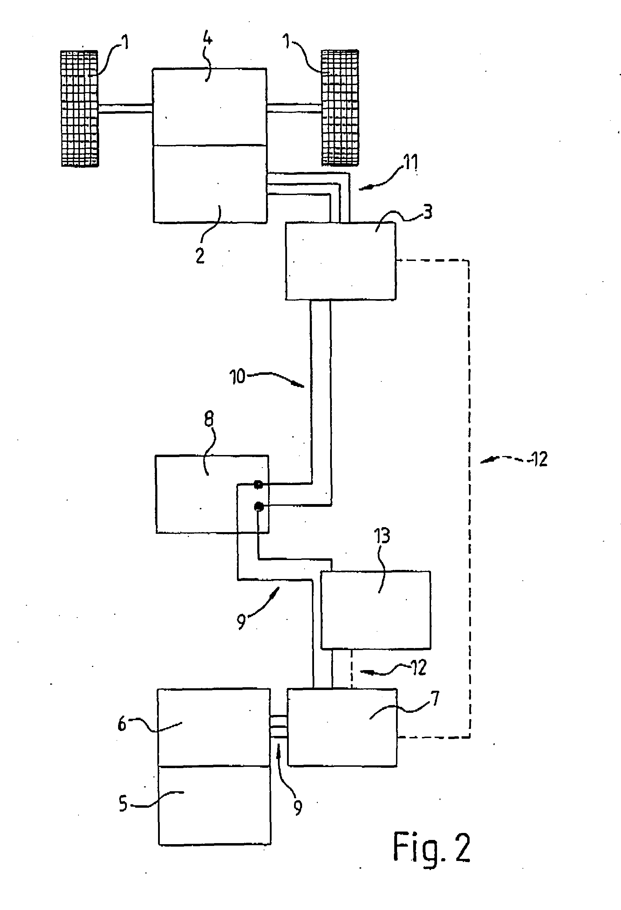

Gemäß der zweiten Ausführungsform, die in Figur 2 dargestellt ist, ist ein Messwiderstand 13 vorgesehen, der elektrisch zwischen der Generatorsteuerung 7 und der Traktionsbatterie 8 angeordnet ist. Der Messwiderstand 13 ist hierbei eingesetzt, um die Leistung des Generators 6 zu modulieren.

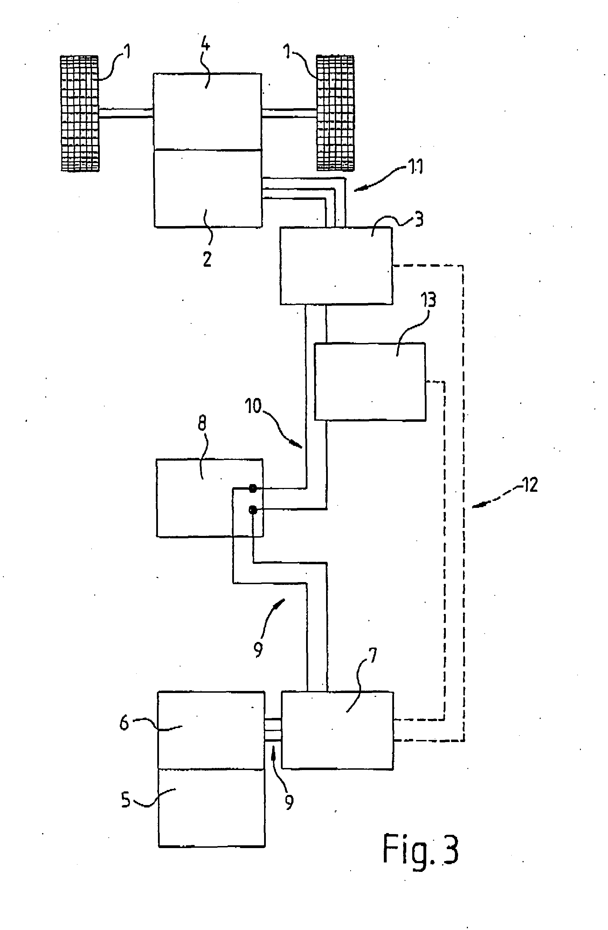

Gemäß dem Ausführungsbeispiel der Figur 3 ist der Messwiderstand 13 zwischen der Fahrsteuerung 3 und der Traktionsbatterie 8 angeordnet.

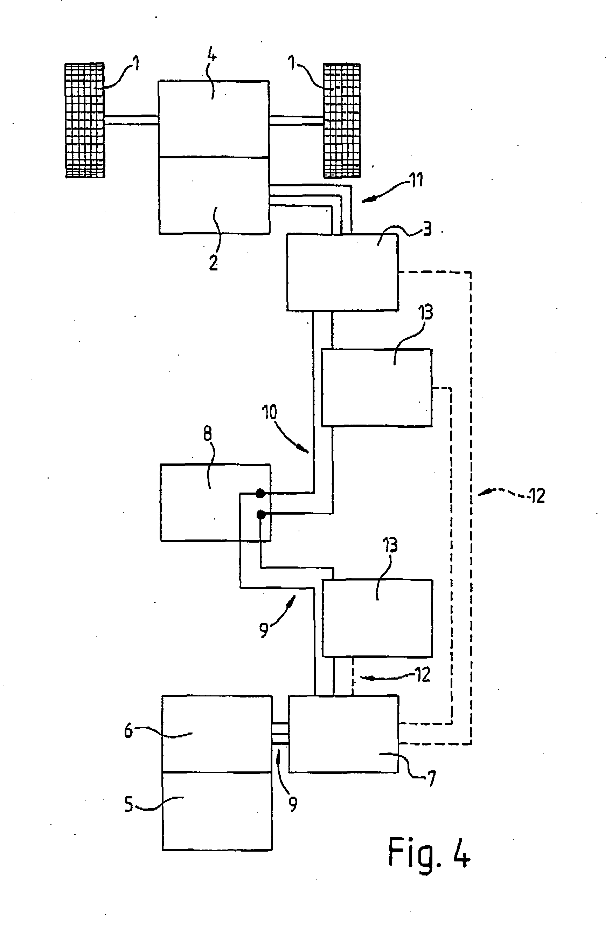

In Figur 4 ist eine vierte Ausführungsform der Erfindung dargestellte wobei sowohl ein Messwiderstand 13 zwischen der Generatorsteuerung 7 und der Traktionsbatterie 8 als auch wischen der Fahrsteuerung 3 und der Traktionsbatterie 8 angeordnet ist. Dies ist eine besonders vorteilhafte Variante, da sie es z.B. erlaubt, das Ausmaß bzw. die Intensität der Ladespannungs- und/oder Ladestromreduzierung in Abhängigkeit von der Stärke des Rekuperationsstroms zu modulieren.

Die dargestellten Ausführungsbeispiele erheben keinen Anspruch auf Vollständigkeit der möglichen Varianten, sondern sollen lediglich beispielhaften Charakter besitzen. Zudem können in der Praxis noch weitere Komponenten verwendet werden, die jedoch dem Fachmann geläufig sind, wie z.B. Datenleitungen, mit denen unter anderem Betriebsdaten wie Temperatur etc. übertragen werden können. Da diese jedoch für die Erfindung von untergeordneterem Interesse sind, wurden diese aus Gründen der Übersichtlichkeit in den Figuren nicht dargestellt.

### Bezugszeichenliste

- 1: Laufrad
- 2: Motor/Generator
- 3: Fahrsteuerung
- 4: Getriebe
- 5: Dieselmotor
- 6: Generator/Motor
- 7: Generatorsteuerung
- 8: Batterie
- 9: Leitung
- 10: Leitung
- 11: Leitung
- 12: Leitung
- 13: Messwiderstand

## Patentansprüche

1. Flurförderzeug insbesondere Hybrid-Fahrersitz-Zugmaschine, mit wenigstens einem einen in einem elektrischen Leistungskreis (9, 10, 11) fließenden Antriebsstrom aufweisenden, elektrisch angetriebenen Fahrmodus, wobei eine Antriebsmaschine (2) zum Antreiben wenigstens eines Laufrades (1) als Elektromotor (2) ausgebildet ist, wobei wenigstens eine Verbrennungskraftmaschine (5), insbesondere ein Dieselmotor (5), zum Erzeugen einer das Fahrzeug antreibenden Antriebsenergie vorgesehen ist, wobei wenigstens ein von der Verbrennungskraftmaschine (5) antreibbarer Stromgenerator (6) zum Erzeugen der Antriebsenergie und/oder elektrischer Energie für Speichermittel (8), insbesondere für wenigstens eine Batterie oder einen Akkumulator, vorgesehen ist, wobei wenigstens in einem Bremsmodus bzw. Rekuperationsmodus des Flurförderzeuges, insbesondere in einem Generator-Modus des Elektromotors (2), eine Reduktion der Ladespannung und/oder des Ladestroms des Stromgenerators vorgesehen ist, wobei eine Kontrolleinheit (3, 7) zum Kontrollieren der Ladespannung und/oder des Ladestroms des Stromgenerators (6) vorgesehen ist, **dadurch gekennzeichnet, dass** die Kontrolleinheit (3, 7) zum Kontrollieren der Ladespannung und/oder des Ladestroms des Stromgenerators (6) in Abhängigkeit von der Stromrichtung des elektrischen Antriebsstroms im Leistungskreis (9, 10, 11) ausgebildet ist.

2. Flurförderzeug nach Anspruch 1, **dadurch gekennzeichnet, dass** die Kontrolleinheit (3, 7) zum Kontrollieren der Ladespannung und/oder des Ladestroms des Stromgenerators (6) in Abhängigkeit von der Stromrichtung und der Stromstärke des elektrischen Antriebsstroms im Leistungskreis (9, 10, 11) ausgebildet ist.

3. Flurförderzeug nach einem der vorgenannten Ansprüche, **dadurch gekennzeichnet, dass** wenigstens eine einen Sensor (13) umfassende Sensoreinheit (13) zum Erfassen der Stromrichtung des elektrischen Antriebsstroms im Leistungskreis (9, 10, 11) vorgesehen ist.

4. Flurförderzeug nach einem der vorgenannten Ansprüche, **dadurch, gekennzeichnet, dass** wenigstens eine einen Sensor (13) umfassende Sensoreinheit (13) zum Erfassen der Stromstärke des elektrischen Antriebsstroms im Leistungskreis . (9, 10, 11) vorgesehen ist.

5. Flurförderzeug nach einem der vorgenannten Ansprüche, **dadurch gekennzeichnet, dass** der Sensor (13) als Messwiderstand (13) ausgebildet ist.

6. Flurförderzeug nach einem der vorgenannten Ansprüche, **dadurch gekennzeichnet, dass** die Kontrolleinheit (3, 7) wenigstens einen AC-Inverter (3, 7) aufweist.

7. Flurförderzeug nach einem der vorgenannten Ansprüche, **dadurch gekennzeichnet, dass** wenigstens eine Modulationseinheit zum Modulieren der Ladespannung und/oder des Ladestroms eines Stromgenerators vorgesehen ist.

8. Flurförderzeug nach einem der vorgenannten Ansprüche, **dadurch gekennzeichnet, dass** die Modulationseinheit zum Modulieren der Ladespannung und/oder des Ladestroms des Stromgenerators in Abhängigkeit der Stromstärke des Antriebsstroms ausgebildet ist.

9. Flurförderzeug nach einem der vorgenannten Ansprüche, **dadurch gekennzeichnet, dass** die Modulationseinheit zum Modulieren der Ladespannung und/oder des Ladestroms des stromgeneratorsin Abhängigkeit des Ladezustandes der Speichermittel (8) ausgebildet ist.

10. Flurförderzeug nach einem der vorgenannten Ansprüche, **dadurch gekennzeichnet, dass** die Modulationseinheit zum Modulieren der Ladespannung und/oder des Ladestroms eines Stromgenerators in Abhängigkeit vom Alter der Speichermittel (8) ausgebildet ist.

11. Flurförderzeug nach einem der vorgenannten Ansprüche, **dadurch gekennzeichnet, dass** im Leistungskreis wenigstens eine Diode vorgesehen ist.

12. Flurförderzeug nach einem der vorgenannten Ansprüche, **dadurch gekennzeichnet, dass** eine Diode elektrisch zwischen Generator und Batterie angeordnet ist.

13. Verfahren zum Kontrollieren eines Flurförderzeug, insbesondere Hybrid-Fahrersitz-Zugmaschine, mit wenigstens einem einen in einem elektrischen Leistungskreis fließenden Antriebsstrom aufweisenden, elektrisch angetriebenen Fahrmodus, wobei eine Antriebsmaschine (2) zum Antreiben wenigstens eines Laufrades (1) als Elektromotor (2) ausgebildet wird, wobei wenigstens eine Verbrennungskraftmaschine (5), insbesondere ein Dieselmotor, zum Erzeugen einer das Fahrzeug antreibenden Antriebsenergie verwendet wird, wobei wenigstens ein von der Verbrennungskraftmaschine (5) antreibbarer Stromgenerator (6) zum Erzeugen der Antriebsenergie und/oder elektrischer Energie für Speichermittel (8), insbesondere für wenigstens eine Batterie oder einen Akkumulator, verwendet wird, wobei wenigstens in einem Bremsmodus bzw. Rekuperationsmodus des Flurförderzeuges, insbesondere in einem Generator-Modus des Elektromotors, die Ladespannung und/oder der Ladestrom des Stromgenerators reduziert wird, wobei eine Kontrolleinheit (3, 7) zum Kontrollieren der Ladespannung und/oder des Ladestroms des Stromgenerators (6) verwendet wird, **dadurch gekennzeichnet, dass** die Stärke der Ladespannung und/oder des Ladestroms des Stromgenerator in Abhängigkeit von der Stromrichtung des elektrischen Antriebsstroms im Leistungskreis moduliert wird.

14. Verfahren nach Anspruch 13, **dadurch gekennzeichnet, dass** ein Flurförderzeug nach einem der vorgenannten Ansprüche verwendet wird.
